# EUROPÄISCHE PATENTANMELDUNG

(11) **EP 2 991 195 A1**
(43) Veröffentlichungstag der Anmeldung: **02.03.2016**
(21) Anmeldenummer: 14183004.2
(22) Anmeldetag: 01.09.2014
(51) Int. Cl.: H02K 1/27, H02K 1/30

(54) **Permanenterregte dynamoelektrische Maschine**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)

(57) **Zusammenfassung**

Die Erfindung betrifft eine permanenterregte dynamoelektrische Maschine (1), mit einem Stator (2) und einem um eine Achse (5) rotierbaren Rotor (3), wobei der Stator (2) ein Wicklungssystem (10) aufweist, das in Nuten (9) eines einen magnetischen Rückschluss bildenden Material (15) eingebettet ist und mit einem Permanentmagneten (11) des Rotors (3) über einen Luftspalt (8) zwischen Stator (2) und Rotor (3) elektromagnetisch wechselwirkt, wobei die Permanentmagnete (11) auf dem Rotor (3) angeordnet sind, wobei jeder einzelne Permanentmagnet auf der dem Luftspalt (8) zugewandten Seite einen Nord- und einen Südpol aufweist.

## Beschreibung

Die Erfindung betrifft eine permanenterregte dynamoelektrische Maschine mit einem Stator und einem um eine Achse rotierbaren Rotor, wobei der Stator ein Wicklungssystem aufweist, das in Nuten eines einen magnetischen Rückschluss bildenden Materials eingebettet ist und mit einem Permanentmagneten des Rotors über einen Luftspalt zwischen Stator und Rotor elektromagnetisch wechselwirkt.

Permanenterregte dynamoelektrische Maschinen weisen auf ihrem Rotor Permanentmagnete auf. Je nach Anordnung der Permanentmagnete und deren Verteilung auf dem Rotor, wird ein Rotor mit mehr oder weniger Polen geschaffen. Für gewisse Anwendungsbereiche sind kleine Polteilungen äußerst sinnvoll aber aufgrund der Herstellbarkeit eines derartigen Rotors, insbesondere der Hantierung mit kleinen Permanentmagneten ist dies äußerst umständlich und damit zeitaufwändig.

Des Weiteren werden derartige Magnetmaterialien auf dem Rotor angebracht, wobei aber nicht das Magnetmaterial zu 100% ausgenutzt wird.

Des Weiteren kann mit magnetisierten Magnetringen prinzipiell ein Rotor aufgebaut werden, dies ist jedoch nur bei vergleichsweise geringen Durchmessern des Rotors möglich. Auch bei Magnetringen die im Wesentlichen einer Halbach Magnetanordnung folgen, liegt ein vergleichsweise hoher Anteil des Magnetvolumens vor, der nicht wirksam genutzt wird.

Ausgehend davon liegt der Erfindung die Aufgabe zugrunde, eine derartige Magnetanordnung für permanenterregte dynamoelektrische Maschinen mit kleiner Polteilung, hoher Luftspaltinduktion bei gleichzeitiger optimiertem Magneteinsatz zu schaffen, wobei außerdem die Trägheit des Rotors vergleichsweise gering sein soll.

Die Lösung der gestellten Aufgabe gelingt durch eine permanenterregte dynamoelektrische Maschine mit einem Stator und einem um eine Achse rotierbaren Rotor, wobei der Stator ein Wicklungssystem aufweist, das in Nuten eines einen magnetischen Rückschluss bildenden Material eingebettet ist und mit einem Permanentmagneten des Rotors über einen Luftspalt zwischen Stator und Rotor elektromagnetisch wechselwirkt, wobei die Permanentmagnete auf dem Rotor angeordnet sind, wobei jeder einzelne Permanentmagnet auf der dem Luftspalt zugewandten Seite einen Nord- und einen Südpol aufweist.

Diese nunmehr speziellen Permanentmagnete weisen eine laterale Magnetisierung auf. Dabei weist eine Seite der einzelnen Permanentmagnete beide Pole, also Nord- und Südpol auf. Vorteilhafterweise wird dabei das Magnetmaterial auf die durch die Feldlinien durchsetzten Materialien des Permanentmagneten reduziert und es ist kein magnetischer Rückschluss wie bei klassischen Permanentmagneten über ein Blechpaket notwendig.

Erfindungsgemäß ermöglicht dies nunmehr eine vergleichsweise geringe Rotorträgheit zu erhalten bzw. zu schaffen, indem eine trägheitsarme Struktur des Rotors vorgesehen wird. Diese trägheitsarme Struktur trägt zum einen Richtung Luftspalt der dynamoelektrischen Maschine die Permanentmagnete und ist auf der anderen Seite, auf einer Welle, insbesondere an einer amagnetischen Welle drehfest positioniert.

Dennoch können auch die Rotoren wie bisher geblecht ausgeführt werden, wobei die Permanentmagnete in dementsprechenden Ausnehmungen/Vertiefungen oder der Oberfläche des Rotors angeordnet sind, so dass sich ein zylinderförmiger Rotor ergibt, der einen konstanten Luftspalt zum Stator der permanenterregten dynamoelektrischen Maschine aufweist.

Die Permanentmagnete sind demnach als Magnetlinsen oder auch als Magnetschalen ausgeführt und sind am Umfang des Rotors angeordnet. Durch die erfindungsgemäße Anordnung, insbesondere einer Polbedeckung von 100% der Permanentmagnete am Umfang des Rotors wird eine dementsprechende Drehmomentsteigerung bei gleichzeitiger Optimierung des Magnetvolumens geschaffen. Dies reduziert die Herstellungskosten und ermöglicht Rotoren herzustellen, die zum einen mit großem Durchmesser, als auch mit geringer Trägheit ausgebildet sind. Diese hochpoligen Rotoren weisen eine hohe Luftspaltinduktion auf und sind demnach mit einem hohen Drehmoment ausgestattet.

Ebenso ist eine Schrägung und/oder Staffelung der magnetischen Pole über die axiale Länge des Rotors betrachtet möglich.

Vorteilhafterweise sind die Permanentmagnete bezüglich ihrer dem Luftspalt abgewandten Seite derart ausgebildet, dass sie einer Form folgen, die der magnetischen Vorzugsrichtung dieses einen Permanentmagneten innewohnt.

Derartige erfindungsgemäße permanenterregte dynamoelektrische Maschinen werden vorteilhafterweise als Windkraftgeneratoren eingesetzt, da dort eine Hochpoligkeit und eine dementsprechende hohe Luftspaltinduktion gefordert wird, um das Windangebot möglichst hoch effizient in elektrischer Energie umzusetzen. Dabei sind sowohl Innenläufergeneratoren als auch Außenläufergeneratoren einzusetzen, ebenso sind die Generatoren als Direktantrieb oder als Generator mit vorgeschaltetem Getriebe vorgesehen. Ebenso sind weitere Anwendungen bei E-Aircraft und E-Cars vorstellbar.

Die Erfindung sowie weitere vorteilhafte Ausgestaltungen der Erfindung sind den folgenden Ausführungsbeispielen zu entnehmen. Dabei zeigen:
- FIG 1: einen Längsschnitt einer dynamoelektrischen Maschine,
- FIG 2: einen Querschnitt eines Rotors,
- FIG 3: einen weiteren Querschnitt eines Rotors mit einer Tragstruktur,
- FIG 4: eine perspektivische Darstellung eines Blechpakets eines Rotors,
- FIG 5: einen Permanentmagneten in teilperspektivischer Darstellung,
- FIG 6: einen Rotor in teilperspektivischer Darstellung,
- FIG 7: einen Längsschnitt einer Gondel einer Windkraftanlage,
- FIG 8: einen Teilquerschnitt einer dynamoelektrischen Maschine mit Außenläufer,
- FIG 9 bis 11: beispielhafte Ausführungsformen eines Permanentmagneten,
- FIG 12: Querschnitt eines Rotors.

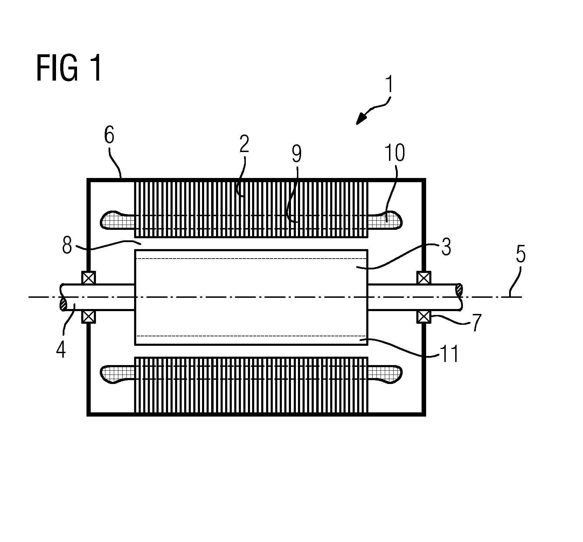

FIG 1 zeigt in einem prinzipiellen Längsschnitt eine dynamoelektrische Maschine 1, die in einen Gehäuse 6 positioniert ist. Die erfindungsgemäße dynamoelektrische Maschine 1 kann aber ebenso gehäuselos ausgeführt sein. Das Gehäuse 6 stützt sich über Lager 7 auf einer mit einem Rotor 3 drehfest verbundenen Welle 4 ab. Im Betrieb der dynamoelektrischen Maschine 1 dreht sich der Rotor um eine Achse 5. In einem Stator 2 der dynamoelektrischen Maschine 1 ist im wesentlichen axial verlaufenden Nuten 9 ein Wicklungssystem 10 angeordnet. Das Wicklungssystem 10 bildet an den Stirnseiten des Stators 2 Wickelköpfe aus. Das Wicklungssystem 10 ist dabei als ein gesehntes Wicklungssystem oder mit Zahnspulen ausgeführt.

Der Rotor 3 weist an seiner Oberfläche und dem Luftspalt 8 zugewandten Seite Permanentmagnete 11 auf. Durch elektromagnetische Wechselwirkung des Rotors 3 und seinen Permanentmagneten 11 mit dem Wicklungssystem 10 des Stators 2 wirkt die dynamoelektrische Maschine 1 entweder als Generator oder als Antriebsmotor.

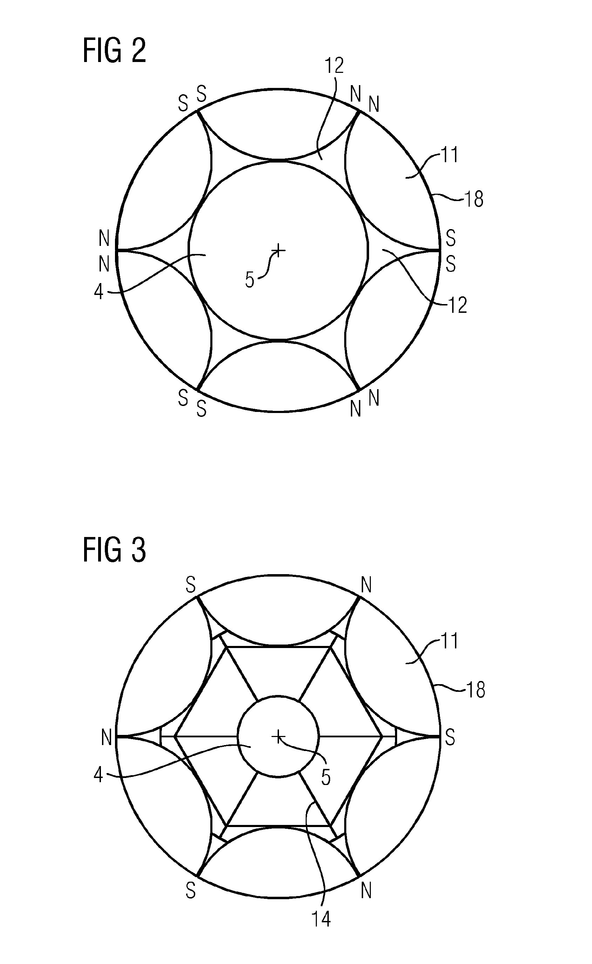

FIG 2 zeigt im Querschnitt eines Rotors 3 sechs Pole, wobei diese sechs Pole durch im Wesentlichen asymmetrische linsenförmige Permanentmagnete 11 gebildet werden. Diese Permanentmagnete 11 sind lateral magnetisiert, d.h. man kann sich diesbezüglich einen Stabmagneten vorstellen, dessen Enden, also die Pole einander zugewandt - im Extremfall nahezu zusammengeklappt werden.

Grundsätzlich wird ein magnetischer Pol N oder S des Rotors 3 also durch zwei aneinander liegende gleichnamige Pole NN oder SS des Permanentmagneten 11 gebildet.

Diese Permanentmagnete 11 sind in einer im Wesentlichen sternförmigen Tragstruktur 14 untergebracht, wobei in Umfangsrichtung betrachtet zwischen den Permanentmagneten 11 ein Volumen 12 vorhanden ist, das magnetisch nicht aktiv ist und nicht zur Drehmomentbildung beiträgt. Dieses Volumen 12 ist zwischen den Permanentmagneten 11 Richtung Achse 5 angeordnet.

FIG 3 zeigt in einer weiteren Darstellung des Rotors 3 die Anordnung der linsenförmigen Permanentmagnete 11 in einer speichenartigen Tragstruktur 14. Diese ist an der Welle 4 drehfest positioniert und damit um eine Achse 5 drehbar angeordnet. Am Außenumfang des Rotors 3 treten somit in Umfangrichtung betrachtet abwechselnd Nord- und Südpole auf. Durch die speichenartigen Tragstruktur 14 reduziert sich das Trägheitsmoment gegenüber vergleichsweise aufgebauten Rotoren mit herkömmlichen Permanentmagneten und es kann in den Volumina 12 Magnetmaterial eingespart werden, so dass sich die Trägheit weiter reduziert. Des Weiteren erlaubt dieser Aufbau eine kostengünstige Fertigung.

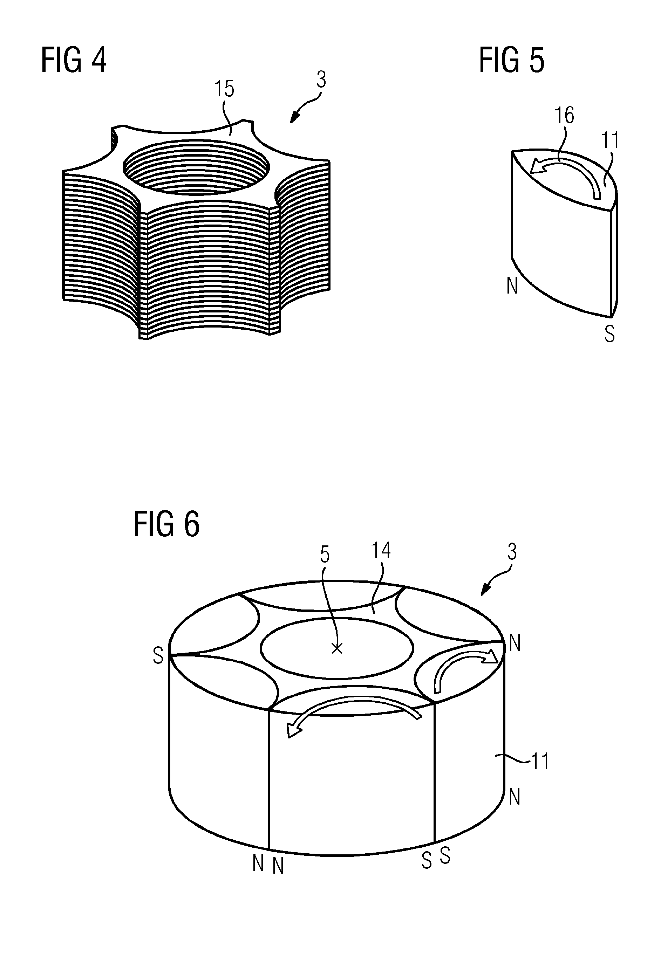

Als Tragstruktur 14 eignet sich ebenso ein klassisches Blechpaket 15 des Rotors 3, gemäß FIG 4, das Ausnehmungen bzw. Vertiefungen aufweist, die jeweils mit der Formgebung des Permanentmagneten 11 korrespondieren und in die somit die Permanentmagnete 11 formschlüssig eingesetzt werden können. Vorteilhafterweise werden dabei die Permanentmagnete 11 durch einen Kleber vorfixiert, wobei bei der kompletten Bestückung des Rotors 3 bzw. der Tragstruktur 14 anschließend eine Bandagierung des gesamten Rotors 3 erfolgt. Diese Bandagierung gewährleistet u.a., dass der Motor bzw. Generator auch bei höheren Drehzahlen die Positionierung seiner Permanentmagnete 11 gewährleistet ist.

FIG 5 zeigt einen lateral magnetisierten Permanentmagneten 11 mit seiner magnetischen Vorzugsrichtung 16. Dieser in diesem Fall im Querschnitt betrachtet linsenförmige Magnetkörper weist zwei gekrümmte Ebenen auf. Die Ebene mit vergleichsweise großem Radius ist in diesem Fall die dem Luftspalt 8 zugewandte Seite, die auch Nordpol und Südpol aufweist. Die mit geringerem Radius ausgeführte Seite ist dem Blechpaket 15 oder der Tragstruktur 14 zugewandt.

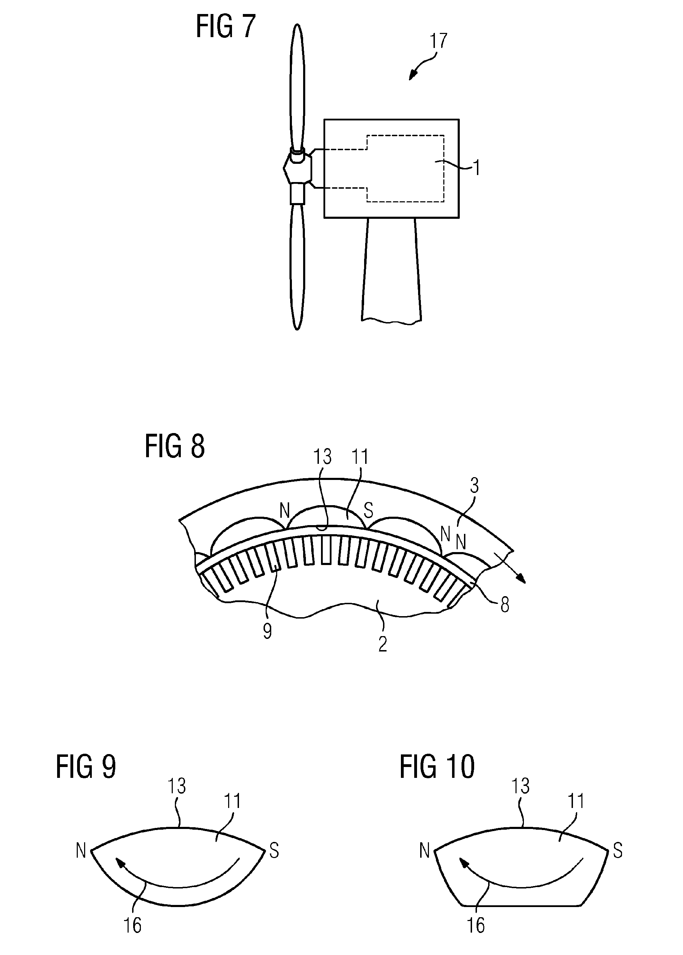

Vergleichbare Ausführungsformen zeigen auch die FIG 9 und FIG 10, auf die später noch eingegangen wird, wobei in der FIG 10 die strenge linsenförmige Ausgestaltung des Permanentmagneten 11 verlassen wurde.

FIG 6 zeigt in einer perspektivischen Darstellung einen Rotor 3 mit Permanentmagneten 11 auf einer Tragstruktur 14. An den Stoßbereichen der Permanentmagneten 11 sind die jeweiligen Nord- und Südpole N, S des Rotors 3 angeordnet. Jeder Permanentmagnet 11 weist somit zum Luftspalt 8 einen Nord- und einen Südpol. Es liegt eine nahezu 100%-ige Polbedeckung vor.

FIG 7 zeigt die Anwendung einer derartigen dynamoelektrischen Maschine 1 in einer Windkraftanlage 17. Dabei kann die als Generator eingesetzte dynamoelektrische Maschine 1 direkt (als Direktantrieb) oder über ein Getriebe angetrieben werden.

Eine derartige erfindungsgemäße dynamoelektrische Maschine 1 kann, wie FIG 7 prinzipiell in einem Längsschnitt darstellt, in der Gondel einer Windkraftanlage angeordnet werden. Eine derartige erfindungsgemäße dynamoelektrische Maschine weist eine Hochpoligkeit auf, die insbesondere für direkt angetriebene Generatoren wichtig ist. Diese Maschine kann einfach hergestellt werden und weist eine vergleichsweise hohe Luftspaltinduktion im Luftspalt 8 der dynamoelektrischen Maschine 1 auf, was wiederum die Energieeffizienz der Windkraftanlage steigert.

FIG 8 zeigt dabei eine dynamoelektrische Maschine 1, die als Außenläufer eines Generators bzw. Motors ausgebildet ist. Dabei sind die Permanentmagnete 11 nunmehr, um sich den Luftspalt 8 der dynamoelektrischen Maschine 1 anzupassen, nicht mehr linsenförmig sondern eher sichelförmig bzw. schalenförmig ausgebildet. Dabei ist aber wiederum die dem Luftspalt 8 abgewandte Seite des Permanentmagneten 11 an der Vorzugsrichtung der Magnetisierung ausgerichtet. Nord- und Südpol des Permanentmagneten 11 weisen zum Luftspalt 8. Der Stator 2 ist dabei prinzipiell mit Nuten 9 versehen, in denen Wicklungssysteme positioniert werden.

FIG 8 zeigt beispielhaft eine Ausführung so einer dynamoelektrischen Maschine 1 mit Außenläufer. Der erfinderische Gedanke ist an diese Gegebenheiten angepasst, d.h. das Wicklungssystem des Stators 2 befindet auf einem inneren Tragelement, wobei die Nuten zu dem Luftspalt 8 weisen. Die Permanentmagnete 11 sind dementsprechend in ihrer Formgebung (Radien) an die Belange des Außenläufers angepasst.

FIG 9 und 10 zeigen jeweils Ausführungsformen eines Permanentmagneten 11 für einen Innenläufermotor, bei dem der zum Luftspalt 8 zugewandte Abschnitt 13 des Permanentmagneten 11 dem Radius der Statorbohrung angepasst ist. Auch die Formgebung des vom Luftspalt 8 abgewandten Seite des Permanentmagneten 11 ist vorzugsweise rundlich, wie dies FIG 9 zeigt, kann aber auch aus Gründen der Herstellungsverfahren wie in FIG 10 dargestellt, im Prinzip trapezförmig ausgebildet sind. Entscheidend dabei ist, dass durch die laterale Magnetisierung dieses Magneten 11 kein zusätzliches Rückschlussmaterial innerhalb des Rotors vorgesehen werden muss, da sowohl die magnetische Polbildung als auch die Magnetfeldführung im Permanentmagneten 11 erfolgt.

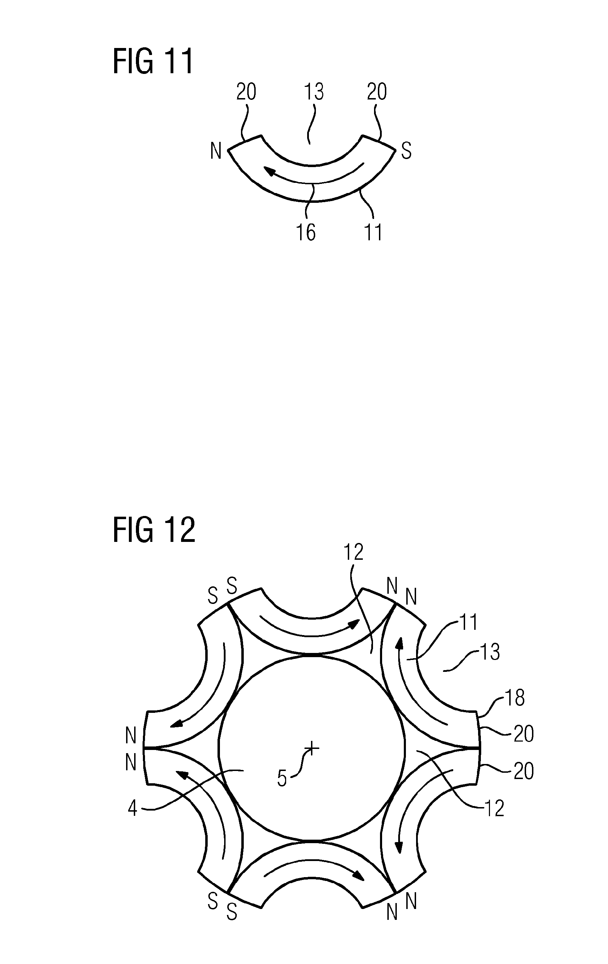

FIG 11 zeigt in einer weiteren Ausführungsform eines Permanentmagneten 11 für einen Innenläufermotor, bei dem der zum Luftspalt 8 zugewandte Abschnitt 13 des Permanentmagneten 11 dem Radius der Statorbohrung konkav ausgebildet ist. Dabei bilden die Endabschnitte 20 die rundliche Form des Rotors 3.

FIG 12 zeigt im Querschnitt eines Rotors 3 sechs Pole, wobei diese sechs Pole durch im Wesentlichen asymmetrische schalenförmige Permanentmagnete 11 gemäß FIG 11 gebildet werden. Diese Permanentmagnete 11 sind ebenfalls lateral magnetisiert, d.h. im konkreten Fall die Enden eines Stabmagneten sind einander. Ein magnetischer Pol N oder S des Rotors 3 wird also auch hier durch zwei aneinander liegende gleichnamige Pole NN oder SS des Permanentmagneten 11 gebildet.

Die Abschnitte 20 der Permanentmagnete 11 sind dabei so geformt, dass sich eine rundliche Form einstellt, die der Statorbohrung angepasst ist. Dabei stellt sich im Bereich dieser Abschnitte 20 ein nahezu konstanter Luftspalt 8 ein.

Der erfinderische Gedanke der lateral magnetisierten Permanentmagnete 11 eignet sich auch für Ferritmaterialien, Permanentmagnete 11 mit seltenen Erden-Materialien und Dysprosiumreduzierten Materialien, insbesondere Neodym-Eisen-Bormagnetisierte Materialien, die als Hochenergiemagnete bezeichnet werden. Die Form der Permanentmagnete 11 hängt von der erforderlichen Drehmomentbildung, den geometrischen Abmessungen der Statorbohrung und damit des Rotors 3 und von der erforderlichen bzw. angestrebten Luftspaltinduktion ab.

Um den Querschnitt des Rotors 3 mit derartigen Permanentmagneten 11 nach FIG 11 rund bzw. rundlich zu bestalten, sind vorteilhafterweise die rundlichen Ausnehmungen 13 dieser Permanentmagnete 11 nach FIG 11 mit amagnetischen Material versehen. Dies vermeidet den Luftwiderstand bzw. Geräuschemissionen vor allem bei höheren Drehzahlen des Rotors 3.

Als Anwendung sind beispielsweise 80-polige Rotoren vorgesehen, die vor allem aufgrund der trägheitsarmen Speichenkonstruktion einer Tragstruktur 14 für E-Aircraft, E-Car und auch für Windkraftanlagen einsetzbar sind. Als E-Aircraft, E-Car Anwendungen sind dabei beispielsweise Flugzeuge, Hubschrauber, elektrisch angetriebene Loks, Triebzüge, Straßenbahnen, Lastkraftwagen und elektrisch angetriebene Busse zu sehen.

## Patentansprüche

1. Permanenterregte dynamoelektrische Maschine (1), mit einem Stator (2) und einem um eine Achse (5) rotierbaren Rotor (3), wobei der Stator (2) ein Wicklungssystem (10) aufweist, das in Nuten (9) eines einen magnetischen Rückschluss bildenden Material (15) eingebettet ist und mit einem Permanentmagneten (11) des Rotors (3) über einen Luftspalt (8) zwischen Stator (2) und Rotor (3) elektromagnetisch wechselwirkt, wobei die Permanentmagnete (11) auf dem Rotor (3) angeordnet sind, wobei jeder einzelne Permanentmagnet auf der dem Luftspalt (8) zugewandten Seite einen Nord- und einen Südpol aufweist.

2. Permanenterregte dynamoelektrische Maschine (1) nach Anspruch 1, **dadurch gekennzeichnet, dass** der Rotor (3) mit einer trägheitsarmen Struktur versehen ist, die mit einer Welle (4) drehfest verbunden ist, wobei die trägheitsarme Struktur die Permanentmagnete (11) hält, fixiert und positioniert.

3. Permanenterregte dynamoelektrische Maschine (1) nach Anspruch 1, **dadurch gekennzeichnet, dass** der Rotor (3) geblecht ausgeführt ist, und an seiner Oberfläche Permanentmagnete (11) aufweist.

4. Permanenterregte dynamoelektrische Maschine (1) nach einem der vorhergehenden Ansprüche, **dadurch gekennzeichnet, dass** der Rotor (3) in Umfangsrichtung betrachtet eine Polbedeckung durch die Permanentmagnete von 100% aufweist, d.h., dass die Permanentmagnete (11) in Umfangsrichtung betrachtet, nahezu lückenlos angeordnet sind.

5. Permanenterregte dynamoelektrische Maschine (1) nach einem der vorhergehenden Ansprüche, **dadurch gekennzeichnet, dass** die Permanentmagnete (11) linsenförmig, trapezförmig oder schalenförmig ausgeführt sind, derart, dass unabhängig von der Polanzahl des Rotors (3) der vom Luftspalt (8) abgewandte Abschnitt des Permanentmagneten (11) im Wesentlichen der magnetischen Vorzugsrichtung folgt.

6. Permanenterregte dynamoelektrische Maschine (1) nach einem der vorhergehenden Ansprüche, **dadurch gekennzeichnet, dass** der Rotor (3) hochpolig ausgeführt ist, wobei der Rotor (3) mehr als sechs Pole aufweist.

7. Windkraftanlage mit einem Generator, wobei der Generator eine dynamoelektrische Maschine (1) nach einem der vorhergehenden Ansprüche aufweist.

8. Windkraftanlage, nach Anspruch 7, **dadurch gekennzeichnet, dass** der Generator dieser Windkraftanlage als Außenläufer oder Innenläufer ausgebildet ist und/oder als Direktantrieb oder über ein Getriebe antreibbar ist.

9. Antrieb für ein elektrisch angetriebenes Fluggerät oder ein elektrisch angetriebenes Fahrzeug wie ein E-car oder eine elektrisches Traktionsfahrzeug mit einer dynamoelektrischen Maschine (1) nach einem der Ansprüche 1 bis 6.
